# NEUE EUROPÄISCHE PATENTSCHRIFT

(11) **EP 3 500 769 B2**
(45) Veröffentlichungstag und Bekanntmachung des Hinweises auf die Entscheidung über den Einspruch: **30.08.2023**
(45) Hinweis auf die Patenterteilung: 01.04.2020
(21) Anmeldenummer: 17811185.2
(22) Anmeldetag: 08.08.2017
(51) Int. Cl.: F16D 55/226, F16D 65/18

(54) **VERFAHREN ZUR INNENBEARBEITUNG EINES BREMSSATTELS EINER SCHEIBENBREMSE**
METHOD FOR MACHINING THE INTERIOR OF A BRAKE CALIPER OF A DISC BRAKE
PROCÉDÉ D'USINAGE INTÉRIEUR D'UN ÉTRIER DE FREIN D'UN FREIN À DISQUE

(30) Priorität: 16.08.2016 DE 102016115176
(43) Veröffentlichungstag der Anmeldung: 26.06.2019
(73) Patentinhaber: BPW Bergische Achsen KG, 51674 Wiehl (DE)
(72) Erfinder: FLOCKE, Alexander, 51491 Overath (DE)
(74) Vertreter: DREISS Patentanwälte PartG mbB
(86) Internationale Anmeldenummer: PCT/DE2017/100668
(87) Internationale Veröffentlichungsnummer: WO 2018/033178

(56) Entgegenhaltungen:
- EP-A1- 1 881 472
- EP-A2- 1 160 480
- EP-A2- 1 160 480
- EP-B1- 2 304 261
- EP-B1- 2 304 261
- WO-A1-2007/077206
- DE-A1-102007 001 960
- DE-A1-102008 036 033
- DE-A1-102012 004 605
- DE-A1-102012 004 605
- DE-C2- 19 515 063

## Beschreibung

Die Erfindung betrifft ein Verfahren zur Innenbearbeitung eines Bremssattels einer Scheibenbremse mit den Merkmalen des Oberbegriffs des Patentanspruchs 1. Ein solcher Bremssattel setzt sich zusammen aus einem Sattelabschnitt an der einen Seite der Bremsscheibe der Scheibenbremse, einem Sattelabschnitt an der anderen Seite der Bremsscheibe sowie einem die beiden Sattelabschnitte verbindenden Brückenabschnitt, der bei betriebsfertig montierter Scheibenbremse die Bremsscheibe außen überbrückt und einen Freiraum bereitstellt, in den die Bremsscheibe der Scheibenbremse zumindest teilweise hinein ragt. Zumindest einer der beiden Sattelabschnitte weist einen Hohlraum auf, der zu dem Freiraum hin eine Öffnung aufweist, wobei in dem Hohlraum eine Bremszuspanneinrichtung Platz findet.

Im Stand der Technik sind solche Bremssättel sowohl in einteiliger Bauart im Sinne von einstückig bekannt, als auch in mehrteiliger Bauart. Die mehrteilige Bauart hat grundsätzlich den Vorteil der leichteren Zugänglichkeit einzelner Bremssattelbereiche für die maschinelle Bearbeitung, z. B. mittels Bohr- oder Fräswerkzeugen. Vor allem sind bei mehrteiliger Bauart auch Hohlräume des Bremssattels fertigungstechnisch relativ leicht erreichbar, ebenso die Anschlussflächen, an denen die einzelnen Sattelteile anschließend miteinander verbunden werden, z. B. durch entsprechende Verschraubungen. Diese Verbindung ist aber auch wiederum von Nachteil insofern, als die Sattelteile in einem separaten Montageprozess passgenau miteinander verbunden werden müssen.

Diese Montage- und Passprobleme treten bei einem einstückigen Bremssattel nicht auf. Jedoch schränkt die einstückige Bauart die Möglichkeiten ein, mittels Bohr- oder Fräswerkzeugen an bestimmte Stellen vor allem in den Hohlräumen des Bremssattelgehäuses zu gelangen. Zu den Flächen im Inneren des Bremssattels, die in jedem Fall maschinell bearbeitet werden müssen, gehören Abstützflächen, auf denen die beim Zuspannen der Bremse wirkenden Kräfte lasten. So sind z. B. Bremssättel für Scheibenbremsen bekannt, bei denen zur Krafterhöhung ein Hebel in dem Hohlraum des Bremssattels angeordnet ist, der sich schwenkbar gegen die entsprechend stabil gestaltete Sattelrückwand des Bremssattels abstützt. An dem Ort dieser Abstützung ist eine spanende Bearbeitung in der Regel unverzichtbar.

Zur Bearbeitung solcher Abstützflächen ist es aus der DE 195 15 063 C2 bekannt, das Bearbeitungswerkzeug durch eine eigens dafür bestimmte, seitlich am Sattel vorhandene Arbeitsöffnung in das Innere des Sattels einzuführen. Von Nachteil an dieser Arbeitsöffnung ist, dass diese einzig dem Zweck des Hindurchführens des Bearbeitungswerkzeuges dient, die Öffnung hingegen im Betrieb der Scheibenbremse keinerlei Bestimmung hat.

Auch bei dem Bremssattel nach der DE 10 2007 001 960 A1 wird ein Werkzeug zur Bearbeitung der Abschnittsflächen durch seitlich in dem Bremssattelgehäuse vorhandene Öffnungen in das Innere des Bremssattels verbracht, um die dort angeordneten Abstützflächen zu bearbeiten. Die Öffnungen haben jedoch eine zusätzliche Funktion. Sie sind nicht nur Arbeits- oder Montageöffnungen, sondern sie dienen auch als Stützlager für einen Bolzen, welcher Bestandteil der Bremszuspanneinrichtung ist.

Der ebenfalls einstückige Bremssattel nach der EP 1 881 472 A1 ist zur mechanischen Bearbeitung eines hydraulischen Betätigungszylinders mit einer in Fluchtung zu dem Betätigungszylinder angeordneten Bearbeitungsöffnung versehen. Diese ist nach Art einer Ausnehmung gestaltet und befindet sich in dem gegenüberliegenden, also auf der anderen Seite der Bremsscheibe angeordneten Sattelabschnitt des Bremssattels.

Ein anderes Verfahren zur Bearbeitung der Innenflächen in einem einstückigen Bremssattel ist aus der EP 1 160 480 A2 bekannt. Das Gehäuse des Bremssattels ist rückwertig mit einer Öffnung versehen, die während der Herstellung des Bremssattels die Hindurchführung eines Werkzeuges erlaubt. Das Werkzeug arbeitet dabei im Hintergriff, d. h. es wird einschließlich seines Werkzeugträgers von hinten in das Innere des Bremssattels geführt, jedoch arbeitet der an dem Werkzeug befestigter Fräser in die entgegengesetzte Richtung. Nach Abschluss dieser Arbeiten wird die Arbeitsöffnung durch eine von innen her angesetzte Platte verschlossen.

Aus der gattungsbildenden EP 2 304 261 B1 ist ein Verfahren zum Herstellen eines einstückigen Bremssattels bekannt, bei dem der Bremssattel ohne eine zusätzliche Arbeitsöffnung auskommt. Die einzige Öffnung ist jene zu der Bremsscheibe hin offene Montageöffnung des Bremssattels, durch die die Zuspannung montierbar ist. Durch diese Öffnung hindurch wird ein Werkzeughalter mit dem daran angeordneten Werkzeug in den Hohlraum des Bremssattels verbracht. Für diese Bewegung ist, da der Werkzeughalter L-förmig und zugleich der Brückenabschnitt in Sattellängsrichtung relativ kurz ist, ein überlagerter Bewegungsablauf notwendig, wobei der Werkzeughalter entweder zunächst eine Drehung um eine virtuell in der Bremsscheibenebene liegende Achse und dann eine gerade Bewegung durchführt, oder der Werkzeughalter zunächst eine schräg angewinkelte und anschließend eine gerade Bewegung durchführt. Überlagerte Bewegungsabläufe erfordern entsprechende Bewegungsoptionen. Mit jeder Bewegungsoption geht jedoch auch ein weiteres Lagerspiel einher, was die Präzision der Bearbeitung der Abstützflächen beeinträchtigen kann.

Daher liegt der Erfindung die **Aufgabe** zugrunde, ein Verfahren für die Innenbearbeitung eines Bremssattels einer Scheibenbremse zu schaffen, welches auch bei den für die Bearbeitung eines einstückigen Bremssattels typischen, engen Platzverhältnissen eine hochpräzise Bearbeitung der Abstützflächen innen im Bremssattel ermöglicht.

Zur **Lösung** dieser Aufgabe wird zur Bearbeitung der Abstützflächen ein Werkzeug in der Weise von außerhalb des Bremssattels in den Hohlraum verbracht, dass das Werkzeug durch eine andere Öffnung als die Montageöffnung hindurch in den Hohlraum geführt wird.

Bei dieser Lösung gelangt das Werkzeug durch eine Öffnung in den Hohlraum des Bremssattels, durch die der zugehörige Werkzeughalter nicht hindurch passen würde. Stattdessen gelangen das Werkzeug einerseits und der Werkzeughalter andererseits auf unterschiedlichen Wegen in jenen Bereich des Bremssattels, in dem anschließend die Innenbearbeitung des Sattels erfolgt. Durch jene Öffnung hindurch, welche nicht die Montageöffnung ist, gelangt ausschließlich das Werkzeug selbst in den Hohlraum, also in das Innere des Bremssattels. Der Werkzeughalter hingegen wird auf andere Weise in eine für das anschließende Bearbeiten der Abstützflächen geeignete Position relativ zu der Position des Bremssattels verbracht. Erst dann wird der Werkzeughalter mit dem durch die zusätzliche Öffnung zugeführten Werkzeug bestückt, so dass anschließend das Bearbeiten der Abstützflächen beginnen kann.

Umgekehrt kann das Werkzeug nach Abschluss der Bearbeitung wieder durch dieselbe Öffnung, d. h. durch die zusätzliche Öffnung, aus dem Inneren des Bremssattels hinausgeführt werden.

Da das Bearbeitungswerkzeug, welches z. B. ein Fräskopf oder ein Bohrkopf sein kann, auf anderem Wege in den Bereich der Innenbearbeitung des Bremssattels gelangt als der zugehörige Werkzeughalter, ist der Bewegungsablauf, soweit dieser für die Fertigungspräzision relevant ist, einfach. Zusätzliche, mit zusätzlichem Lagerspiel verbundene Bewegungsoptionen entfallen, wodurch ein hochpräzises Bearbeiten der Abstützflächen innen im Bremssattel ermöglicht wird.

Die Öffnung, durch die das Werkzeug in den Hohlraum des Bremssattels geführt wird, stellt zwar eine zusätzliche Öffnung des Bremssattels dar. Sie kann sich jedoch an einem Ort befinden, zum Beispiel in der Sattelrückwand, wo eine solche Öffnung eine zweite Funktionalität ausüben kann und insbesondere eine Funktionalität, die für den späteren Betrieb der Bremse von Bedeutung ist. Insbesondere kann, wie dies an und für sich aus der DE 195 07 308 A1 bekannt ist, eine solche Öffnung dazu dienen, Elemente einer Rückstelleinrichtung aufnehmen. Denn Scheibenbremsen sind üblicherweise mit einer Nachstelleinrichtung versehen, welche das im Laufe der Zeit sich verändernde Lüftspiel der Bremse nachstellt bzw. nachjustiert. Sind die beiden Bremsbeläge der Scheibenbremse verschlissen, müssen sie ausgetauscht werden, und zugleich muss die Nachstelleinrichtung in ihre Ausgangsstellung zurückgestellt werden, was mittels der erwähnten Rückstelleinrichtung erfolgt.

Vorteilhafte Ausgestaltungen sind in den Unteransprüchen angegeben.

Gemäß einer Ausgestaltung des Verfahrens wird das Werkzeug zunächst durch die Öffnung geführt, und anschließend an den Werkzeughalter, der außerdem mit einem Drehantrieb für das Werkzeug versehen sein kann, übergeben, z. B. durch Kopplung mit dem Werkzeughalter.

Vorzugsweise wird das Werkzeug durch eine Bewegung in Längsrichtung der Öffnung an den Werkzeughalter übergeben.

Gemäß einer weiteren Ausgestaltung des Verfahrens ragt der Werkzeughalter während der Übergabe des Werkzeugs zumindest teilweise in den Freiraum zwischen den beiden Sattelabschnitten hinein.

Eine weitere Ausgestaltung des Verfahrens ist gekennzeichnet durch die Schritte des Überführens des Werkzeugs zu dem Werkzeughalter und des Wegführens des Werkzeugs nach dessen Entkopplung von dem Werkzeughalter Vorzugsweise ist bei der Durchführung der Bearbeitung der Bremssattel in einer Werkstückaufnahme fest positioniert, die relativ zu einem ortsfest angeordneten Maschinengestell in mindestens zwei Bewegungsachsen verfahrbar ist, und wobei die Werkstückaufnahme bei der Bearbeitung der Abstützflächen entlang einer dieser Bewegungsachsen bewegt wird.

Bei Einsatz einer solcherart beweglichen Werkstückaufnahme kann der Werkzeughalter selbst ortsfest und damit unbeweglich an dem Maschinengestell angeordnet sein. Er arbeitet auf diese Weise ohne Lagerspiel, was zu einer hohen Präzision bei der Bearbeitung der Abstützflächen führt.

Gemäß einer weiteren Ausgestaltung werden nacheinander zunächst eine erste Abstützfläche und dann eine zu dieser fluchtende, zweite Abstützfläche bearbeitet, wobei sich die Öffnung zwischen den Abstützflächen befindet. Durch diese Aufteilung der Abstützflächen besteht die Möglichkeit, einen ein zentrales Element der Zuspanneinrichtung bildenden Bremshebel gabelförmig zu gestalten, indem er sich mit einem ersten Schenkel gegen die eine, und mit einem zweiten Schenkel gegen die andere Abstützfläche abstützt.

Zur Bearbeitung der zwei voneinander getrennten Abstützflächen wird vorgeschlagen, dass nach dem Ankoppeln des Werkzeugs eine Relativbewegung des Werkzeugs zu dem Bremssattel in der folgenden Reihenfolge durchgeführt wird:
a) ausgehend von einem Startpunkt gegenüberliegend der Öffnung zu einer Seite dieser Öffnung hin und innen längs der Sattelrückwand,
b) zurück in den Bereich gegenüberliegend der Öffnung, und von dort zu der anderen Seite dieser Öffnung hin und wiederum innen längs der Sattelrückwand,
c) zurück in den Bereich gegenüberliegend der Öffnung.

Gemäß einer weiteren Ausgestaltung des Verfahrens wird die Abstützfläche bzw. jede Abstützfläche H-förmig bearbeitet unter Ausbildung zweier breiterer Stützflächenabschnitte und einem zwischen diesen angeordneten, schmaleren Mittelabschnitt.

Mit einer weiteren Ausgestaltung wird vorgeschlagen, dass die Abstützfläche bzw. jede Abstützfläche als teilzylindrische Rinne bearbeitet wird. Vorzugsweise wird auf die so bearbeitete Abstützfläche eine als teilzylindrische Rinne gestaltete Lagerschale aufgesetzt, an deren Innenseite sich bei montierter Scheibenbremse der Bremshebel abstützen kann.

Weitere Vorteile und Einzelheiten ergeben sich aus der nachfolgenden Beschreibung und unter Bezugnahme auf die beigefügten Zeichnungen. Darin zeigen:
- Fig. 1: in einer Seitenansicht den Bremssattel und die Bremsscheibe einer Nutzfahrzeug-Scheibenbremse;
- Fig. 2: einen Längsschnitt durch den in Fig. 1 mit II bezeichneten Abschnitt des Bremssattels;
- Fig. 3: in einer perspektivischen Ansicht eine Abstützfläche innen an der Sattelrückwand des Bremssattels;
- Fig. 4: die Abstützfläche einschließlich einer dort aufgesetzten Lagerschale;

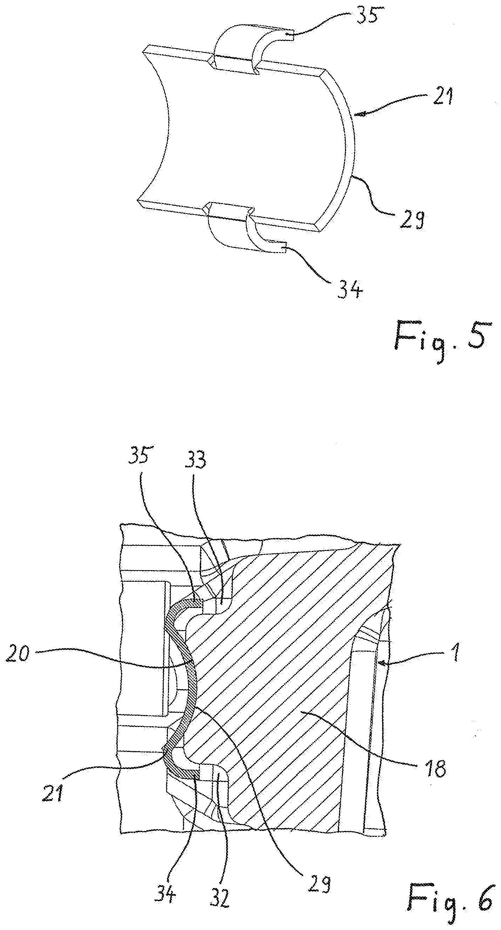

- Fig. 5: die rinnenförmig gestaltete Lagerschale in perspektivischer Einzeldarstellung;
- Fig. 6: einen weiteren Längsschnitt durch die Sattelrückwand, die Abstützfläche und die darauf gesetzte Lagerschale;
- Fign. 7a - d: verschiedene Schritte bei der Innenbearbeitung des Bremssattels mittels eines Fräswerkzeuges, wobei jeweils eine Werkzeugmaschine mit Werkstückhalter, daran positioniertem Bremssattel, einem ortsfesten Werkzeughalter und einer Einrichtung zur Übergabe des Fräswerkzeugs an den Werkzeughalter wiedergegeben ist.

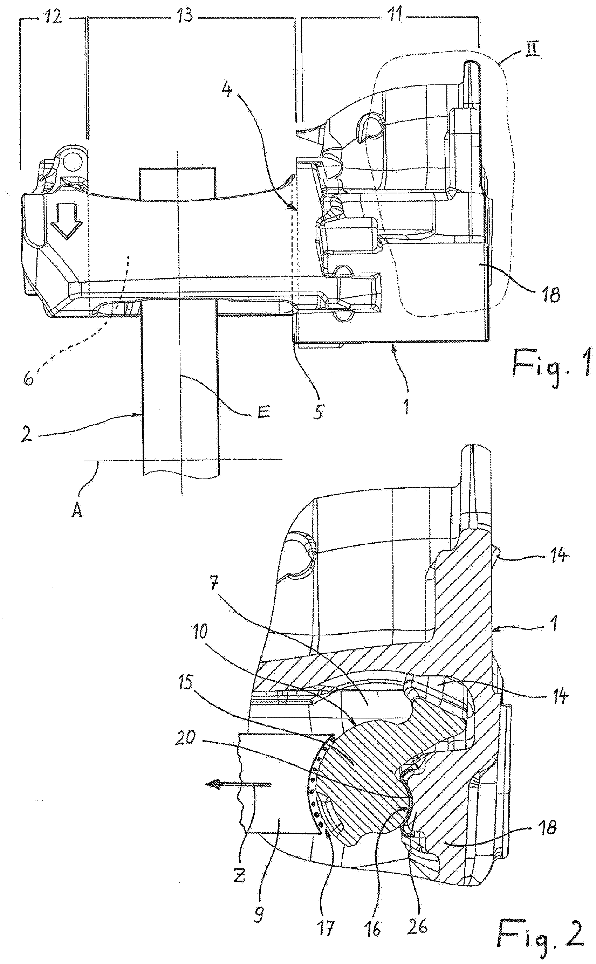

In Fig. 1 und Fig. 2 ist ein Bremssattel 1 einer Scheibenbremse wiedergegeben, wobei die Scheibenbremse hier von der Bauart einer druckluftbetätigten Nutzfahrzeugbremse des Schiebesattel- oder Schwimmsatteltyps ist. Der in einem einzigen Stück gegossene Bremssattel 1 setzt sich aus drei Abschnitten zusammen. Ein erster Sattelabschnitt 11, welcher sich bei montierter Bremse fahrzeuginnen befindet, ist in seinem Inneren mit einem über eine Montageöffnung 4 zugänglichen Hohlraum 7 versehen, welcher Platz für eine Bremszuspanneinrichtung bietet. Ein zweiter Sattelabschnitt 12, welcher sich bei montierter Bremse fahrzeugaußen befindet, ist auf der gegenüberliegenden Seite der Bremsscheibe 2 der Scheibenbremse angeordnet. Die beiden Sattelabschnitte 11, 12 sind durch einen Brückenabschnitt 13 miteinander verbunden, der die Bremsscheibe 2 überbrückt und dabei einen Freiraum 6 für zumindest einen Teil der Bremsscheibe 2 bereitstellt. Die Bremsscheibe 2 rotiert auf der Achse A.

Der Bremssattel 1 ist einstückig insoweit, als die beiden Sattelabschnitte 11, 12 und der Brückenabschnitt 13 aus einem einzigen Teil bestehen, vorzugsweise durch gemeinsames Gießen in Eisenguss oder Stahlguss. Der Hohlraum 7 des ersten Sattelabschnitts 11 ist zu dem Freiraum 6 des Brückenabschnitts 13 hin offen. Diese Öffnung dient u. a. als Montageöffnung 4 und sie ist relativ groß, damit durch sie hindurch die Bremszuspanneinrichtung montiert werden kann. Die Öffnung bzw. Montageöffnung 4 wird, nach abgeschlossener Bremsenmontage, durch einen Deckel 5 verschlossen.

Nicht zeichnerisch wiedergegeben sind die beiden Bremsbeläge der Scheibenbremse. Ein erster Bremsbelag befindet sich in Fig. 1 rechts der Bremsscheibe 2. Dieser zuspannseitige Bremsbelag wird unmittelbar durch die in dem Hohlraum 7 des Sattelabschnitts 11 angeordnete Bremszuspanneinrichtung betätigt und so gegen die Bremsscheibe 2 gedrückt. Der zweite Bremsbelag ist in dem zweiten Sattelabschnitt 12 angeordnet und nimmt dort eine feste Position ein. Er ist der reaktionsseitige Bremsbelag.

Die Aufgabe der Bremszuspanneinrichtung ist die Verstärkung der durch ein Kraftglied erzeugten Bremskräfte und deren Übertragung in Zuspannrichtung Z, die sich parallel zur Achse A der Bremsscheibe 2 erstreckt. Bestandteile der Zuspanneinrichtung sind unter anderem ein in dem Sattelabschnitt 11 des Bremssattels 1 schwenkbar gelagerter Bremshebel 10 sowie ein in Richtung zu dem fahrzeuginneren, zuspannseitigen Bremsbelag arbeitendes Druckstück 8. Das Druckstück 8 hat die Gestalt einer sich quer zur Gehäuselängsrichtung erstreckenden Traverse. Auf der Mitte der Traverse 8 ist diese über ein Gewinde mit einem Druckstempel verbunden, der sich gegen den zuspannseitigen Bremsbelag der Scheibenbremse abstützt, und diesen so gegen die Bremsscheibe 2 beaufschlagen kann.

Der schwenkbare Bremshebel 10 ist gabelförmig gestaltet und besteht aus einem Hebelarm 14 und einer auf zwei Abschnitte aufgeteilten Zuspannwelle 15. Die Zuspannwelle 15 ist gegenüber einer Sattelrückwand 18 abgestützt, die den Hohlraum 7 bremsscheibenabgewandt verschließt. Diese Abstützung gegenüber der Sattelrückwand 18 des Bremssattels erfolgt mittels eines halbschalenförmig gestalteten, teilzylindrischen Schwenklagers 16.

Als Bestandteil des Schwenklagers 18 ist zwischen jedem der zwei Abschnitte der Zuspannwelle 15 und einer innen an der Sattelrückwand 18 angeformten Abstützfläche 20 jeweils eine Lagerschale 21 angeordnet. Ausschließlich an der Lagerschale 21, die ebenso wie die Abstützfläche 20 als eine teilzylindrische Rinne gestaltet ist, stützt sich die Zuspannwelle 15 des Bremshebels 10 ab. Dazu ist die Zuspannwelle 15 im Anlagebereich ebenfalls teilzylindrisch gestaltet mit einem Radius, der gleich ist dem Radius an der Innenseite der gebogenen Lagerschale 21.

In die andere Richtung, also in Zuspannrichtung Z und damit zu den Bremsbelägen bzw. zu der Bremsscheibe 2 hin, ist die Zuspannwelle 15 über ein weiteres Schwenklager 17 schwenkbar gegen das Druckstück 8 abgestützt. Hierzu weist das Druckstück 8 einen Abstützbereich in Gestalt einer Halbschale auf. Das weitere Schwenklager 17 kann als Wälzlager oder als Gleitlager ausgebildet sein.

Zum Erzielen einer hohen Zuspannkraft ist die Zuspannwelle 15 exzentrisch gelagert. Denn das gegen die Lagerschale 21 und damit mittelbar gegen den Bremssattel 1 abgestützte Schwenklager 16 weist eine in der Höhe versetzt angeordnete Schwenkachse im Vergleich zu der Schwenkachse des zwischen der Zuspannwelle 15 und dem Druckstück 8 angeordneten, weiteren Schwenklagers 17 auf. Bei einem Verdrehen der exzentrisch konturierten Zuspannwelle 15 kommt es daher in Zuspannrichtung Z zu einer Vorwärtsbewegung des Druckstücks 8, wodurch die Bremse Bremskraft auf die Bremsbeläge ausübt.

Dem Verdrehen der Zuspannwelle 15 dient der daran einstückig ausgebildete Hebelarm 14. Dieser ist nahe seines freien Endes mit einem Abstützort versehen, gegen den das Kraftglied der Scheibenbremse arbeitet. Bei druckluftbetätigten Scheibenbremsen ist dieses Kraftglied ein pneumatischer Bremszylinder, welcher durch das Druckluftsystem des Fahrzeugs mit Druckluft versorgt wird.

Der Bremshebel 10 ist insgesamt gabelförmig, da er sich, ausgehend von dem auf der Schwenkmittellinie angeordneten Hebelarm 14, in zwei Schenkel verzweigt. An dem ersten Schenkel befindet sich der erste Abschnitt der Zuspannwelle 15, und an dem zweiten Schenkel der zweite Abschnitt der Zuspannwelle 15. Zwischen diesen beiden Abschnitten weist der Bremshebel 10 einen Freiraum auf. Dieser sowie ferner das mit einer Gewindebohrung versehene Zentrum des Druckstücks 8 bieten ausreichend Platz für eine Nachstelleinrichtung, welche den im Laufe der Zeit auftretenden Bremsverschleiß kompensiert und das Lüftspiel der Bremse korrigiert. Bestandteile der Nachstelleinrichtung sind u. a. ein Antriebselement, ein das Lüftspiel der Bremse verringerndes Abtriebselement, eine Einwegekupplung sowie ein Überlastglied. Als Abtriebselement der Nachstelleinrichtung dient eine Spindel. Diese ist mit einem Außengewinde versehen, welches in die Gewindebohrung im Zentrum des Druckstücks 8 eingeschraubt ist. Die meisten Einzelteile der Nachstelleinrichtung sind auf einer Nachstellachse angeordnet. Die Nachstellachse befindet sich auf der Zuspannachse Z und erstreckt sich zugleich senkrecht zu jener Ebene E, in der sich die Bremsscheibe 2 erstreckt.

Da die Zuspannwelle 15 zweigeteilt mit zwei Wellenabschnitten ist, sind auch mindestens zwei Abstützflächen 20 und zwei Lagerschalen 21 für die Abstützung der Wellenabschnitte vorhanden. Von diesen befindet sich eine Abstützfläche 20 mit ihrer Lagerschale 21 auf einer Seite der Zuspannachse Z, und die andere Abstützfläche 20 mit ihrer Lagerschale auf der anderen, gegenüberliegenden Seite der Zuspannachse Z.

In der Mitte zwischen den zwei Abstützflächen 20 und vorzugsweise zugleich auf der Nachstellachse der Nachstelleinrichtung befindet sich in der Sattelrückwand 18 des Bremssattels eine Öffnung 25. Die Öffnung 25 ist vorzugsweise rund und vorzugsweise als Bohrung ausgebildet. Indem die Öffnung 25 in der Sattelrückwand 18 ausgebildet ist, bietet sie bei betriebsfertig montierter Bremse Platz für ein Rückstellelement einer Rückstelleinrichtung. Denn sind die Bremsbeläge der Scheibenbremse verschlissen, müssen sie ausgetauscht werden. Anschließend muss die Nachstelleinrichtung in ihre Ausgangsstellung zurückgestellt werden, was mittels der erwähnten Rückstelleinrichtung erfolgt. Das Rückstellelement dieser Rückstelleinrichtung befindet sich in der Öffnung 25 der Sattelrückwand 18 und ist, vorzugsweise bereits auf der Außenseite der Sattelrückwand 18, mit Schlüsselflächen versehen, an die sich zum Rückstellen der Bremse ein entsprechendes Werkzeug ansetzen lässt.

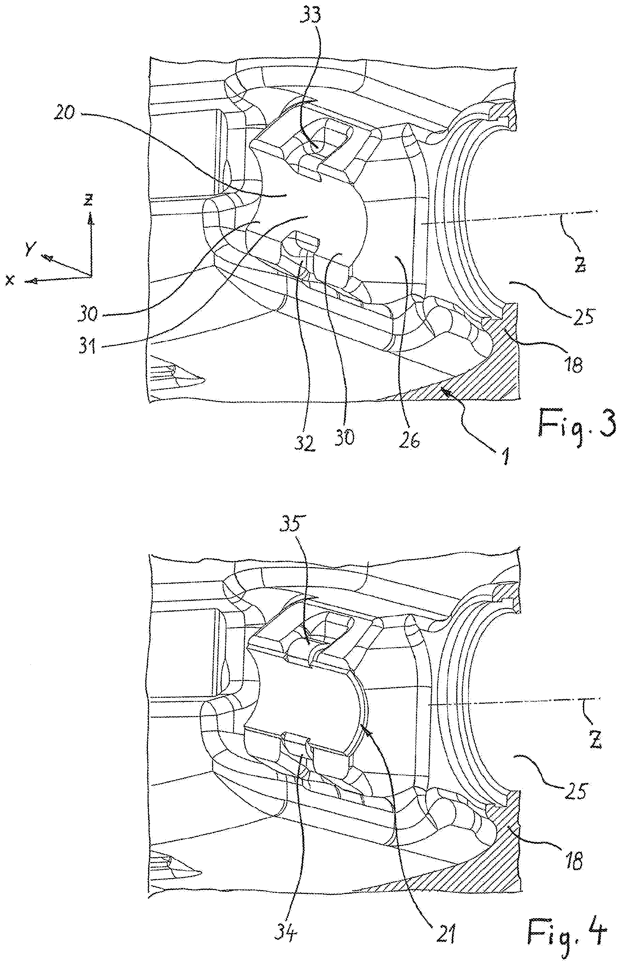

Gemäß Fig. 3 sind die Abstützflächen 20, auf denen die Bremskraft der Scheibenbremse lastet, jeweils als eine teilzylindrisch gekrümmte Rinne oder Schale gestaltet. Die zwei Abstützflächen 20 sind in gegenseitiger Fluchtung angeordnet. Die gemeinsame Bezugsachse der Radien ihrer teilzylindrischen Krümmungskonturen verläuft parallel zu der Ebene E, in der sich die Bremsscheibe erstreckt.

Die Fig. 3 lässt ferner erkennen, dass sich jede Abstützfläche 20 an einem gegenüber der Sattelrückwand 18 nach innen vorstehenden, beim Gießen des Sattels angegossenen Plateau 26 befindet.

Jede Abstützfläche 20 ist H-förmig bearbeitet und besteht aus zwei Stützflächenabschnitten 30 mit größerer Rinnenbreite und einem dazwischen angeordneten Mittelabschnitt 31 mit geringerer Rinnenbreite. Der schmalere Mittelabschnitt 31 ist bedingt durch zwei Einschnitte 32, 33, die das Plateau 26 aufgrund des Gießprozesses aufweist. In jeden Einschnitt 32, 33 ragt eine flügelförmige Lasche 34, 35 der Lagerschale 21 hinein.

Jede Lagerschale 21 besteht aus einem ursprünglich flachen, durch Stanzen und Verformen hergestellten Metallblech. Die teilzylindrisch gekrümmte Außenseite 29 liegt flächig gegen die Abstützfläche 20 an, wobei der Radius des Teilzylinders derselbe ist.

Die Außenseite 29 der Lagerschale 21 erstreckt sich weiter in Umfangsrichtung, als der schmale Mittelabschnitt 31 der Abstützfläche 20. Auf diese Weise ist es der Lagerschale 21 möglich, in Umfangsrichtung auf der Abstützfläche 20 zu wandern. Diese Bewegungsmöglichkeit ist allerdings in beide Umfangsrichtungen begrenzt, indem die Endbereiche der Laschen 34, 35 dann gegen die angegossenen Einschnitte 32, 33 stoßen. Die Laschen 34, 35 dienen daher als Anschläge, um die Bewegungsmöglichkeit der Lagerschale 21 in Umfangsrichtung zu begrenzen.

Ferner besteht die Möglichkeit, dass die Laschen 34, 35 auch die Längsbewegung der teilzylindrischen Lagerschalen 21 begrenzen, indem die Laschen 34, 35 in Achsrichtung der teilzylindrischen Lagerschale 21 schmaler sind als die angegossenen Einschnitte 32, 33.

Die beiden Abstützflächen 20 lassen sich in der geforderten Präzision nicht rein gießtechnisch herstellen. Vielmehr ist es erforderlich, durch ein spanabhebendes Werkzeug und/oder ein Schleifwerkzeug die Abstützflächen 20 mit ihrer exakten, teilzylindrischen Kontur zu versehen. Hierzu muss ein geeignetes Bearbeitungswerkzeug entlang der Abstützflächen 20 geführt werden. Dies kann zum Beispiel ein rotierendes Fräswerkzeug mit teilkreisförmigem Fräskopf sein. Allerdings schränkt die einstückige Bauart des Bremssattels 1 die Möglichkeiten ein, ein Bearbeitungswerkzeug in den Hohlraum 7 des Bremssattelgehäuses zu verbringen, um dort auf den Plateaus 26 die beiden Abstützflächen 20 zu bearbeiten.

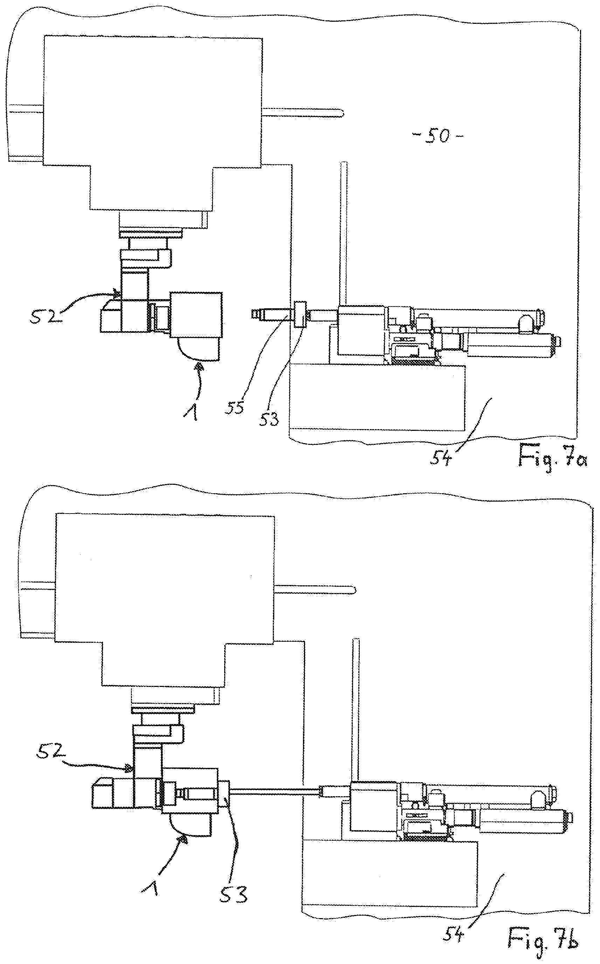

Jedoch gelingt dies bei Anwendung des nachfolgend anhand der Figuren 7a - 7d beschriebenen Verfahrens zur Innenbearbeitung des Bremssattels.

Die Figuren 7a - 7d zeigen jeweils eine Werkzeugmaschine 50 zum Bearbeiten des Bremssattels 1 und insbesondere auch der Abstützflächen 20 sowie ggf. weiterer Innenflächen des Bremssattels 1. Die Werkzeugmaschine 50 verfügt, im Rahmen des hier beschriebenen Fertigungsverfahrens, über zumindest drei Hauptelemente:
1. Die Werkzeugmaschine 50 verfügt über eine Werkstückaufnahme, in der der Bremssattel 1 fest positionierbar ist, z. B. durch Einspannen des Bremssattels. Die Werkstückaufnahme ist relativ zu dem ortsfest angeordneten Maschinengestell 54 der Werkzeugmaschine 50 in mindestens zwei Bewegungsachsen x, y verfahrbar. Die Bewegungsachse x erstreckt sich in Zuspannrichtung Z des eingespannten Bremssattels. Die Achse y erstreckt sich rechtwinklig zu der Achse x und in Längs- bzw. Fluchtungsrichtung der beiden Abstützflächen 20 bzw. parallel zu dieser Längs- bzw. Fluchtungsrichtung. Vorzugsweise ist die Werkstückaufnahme auch noch längs einer dritten Achse z positionierbar, die senkrecht auf den beiden Achsen x, y steht.
2. Die Werkzeugmaschine 50 verfügt ferner über einen Werkzeughalter 52. Dieser ist hier ortsfest an dem Maschinengestell 54 der Werkzeugmaschine angeordnet. Der Werkzeughalter 52 ist zur präzisen Aufnahme und zum Rotationsantrieb des Bearbeitungswerkzeuges 55 eingerichtet. Das Werkzeug 55 ist hier ein Stirnkopffräser, kann aber auch ein Formschleifwerkzeug sein.
3. Die Werkzeugmaschine 50 verfügt ferner über einen Werkzeuggreifer 53. Der Werkzeuggreifer 53 ist, vorzugsweise mittels eines pneumatischen Antriebs, dazu ausgebildet, das Bearbeitungswerkzeug 55 aus seiner Warteposition heraus mittels einer Teleskopeinrichtung soweit an den Werkzeughalter 52 heran zu führen und an diesen zu übergeben, dass das Werkzeug 55 dann an dem Werkzeughalter 52 verriegelbar ist. Die Verriegelung erfolgt zum Beispiel durch Spannen des Werkzeugs 55 in dem Werkzeughalter 52. Nach erfolgter Werkzeugübergabe zieht sich der Werkzeuggreifer 53 mittels der Teleskopeinrichtung wieder in die Warteposition zurück. Ferner ist der Werkzeuggreifer 53 dazu ausgebildet, nach erfolgter Bearbeitung der Abstützflächen 20 das am Werkzeughalter 52 verriegelte Werkzeug zu ergreifen und, nach dessen Entriegelung, zurück in die Warteposition zu transportieren. In beiden Fällen führt der Werkzeuggreifer 53 eine ausschließlich geradlinige Bewegung zwischen Warteposition und Werkzeughalter 52 durch.

Gemäß Fig. 7a wird der zuvor einstückig gegossene Bremssattel 1 in einer der in zwei oder drei Achsen beweglichen Werkstückaufnahme positioniert. Die Werkstückaufnahme stellt den Bremssattel 1 anschließend so zu, dass der an der Werkzeugmaschine 50 ortsfest angeordnete Werkzeughalter 52 in jenen Freiraum 6 im Brückenabschnitt 13 des Bremssattels gelangt, in den bei betriebsfertiger Bremse die Bremsscheibe 2 zumindest zum Teil hineinreicht. Diese Zustellung ist beendet, wenn sich die Werkzeugaufnahme des Werkzeughalters 52 vor oder bereits in der Öffnung 4 des Bremssattels 1 befindet. Dieser Zustand ist in Fig. 7a wiedergegeben.

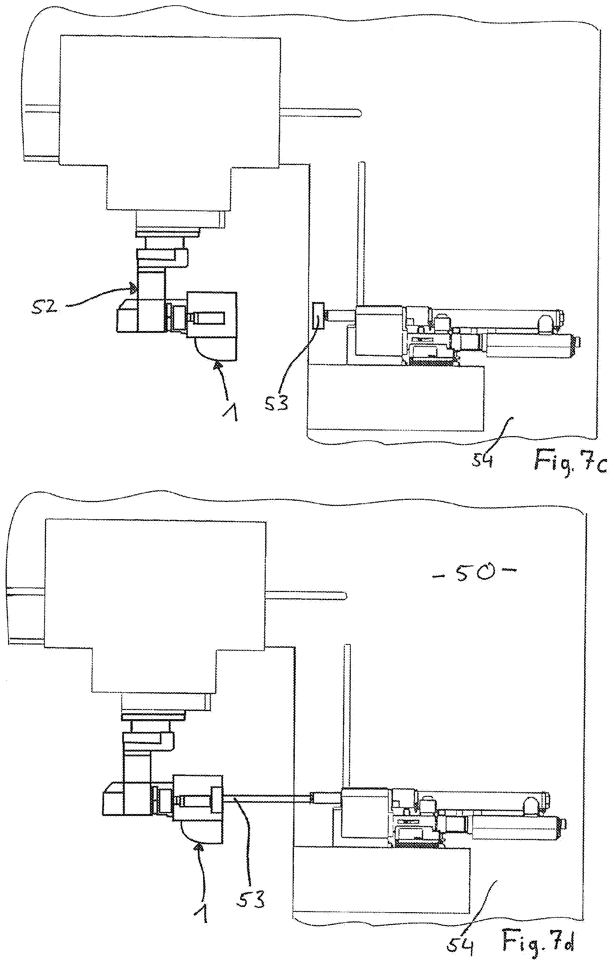

Gemäß Fig. 7b erfolgt daraufhin die Aktivierung des Werkzeuggreifers 53, an dem das Werkzeug 55 vorläufig angeordnet ist. In einer geradlinigen Bewegung führt der Werkzeuggreifer 53 das Werkzeug 55 durch die rückseitige Öffnung 25 und durch den Hohlraum 7 des Bremssattels hindurch bis in die Werkzeugaufnahme des Werkzeughalters 52. Dann wird das Werkzeug 55 an dem Werkzeughalter 52 verriegelt, z. B. in dessen Spannfutter. Anschließend gibt der Werkzeuggreifer 53 das Werkzeug frei und fährt in seine Warteposition zurück. Dies ist in Fig. 7c illustriert. Das Werkzeug befindet sich jetzt zumindest überwiegend in dem Hohlraum 7 des Bremssattels, und der Werkzeughalter 52 befindet sich überwiegend in dem Freiraum 6 vor dem Hohlraum 7.

Nun erfolgt das Bearbeiten der beiden Abstützflächen 20 von dem Freiraum 6 her und durch die Öffnung 4 hindurch mittels des in dem Werkzeughalter 52 rotierenden Fräswerkzeugs 55. Die für die fortschreitende Bearbeitung erforderliche Relativbewegung in y-Richtung (Fig. 3) beruht ausschließlich auf der Bewegung des Werkstückhalters, da der Werkzeughalter 52 ortsfest und unbeweglich ist. Im Einzelnen werden dabei Relativbewegungen des Fräskopfes in Bezug auf die Sattelrückwand 18 in der folgenden Reihenfolge durchgeführt:
a) ausgehend von einem Startpunkt gegenüberliegend der Öffnung 25 zu einer Seite dieser Öffnung 25 hin und innen längs der Sattelrückwand 18,
b) zurück in den Bereich gegenüberliegend der Öffnung 25, und von dort zu der anderen Seite dieser Öffnung 25 hin und wiederum innen längs der Sattelrückwand 18,
c) zurück in den Bereich gegenüberliegend der Öffnung 25.

Sodann fährt gemäß Fig. 7d der Werkzeuggreifer 35 wieder aus, durch die Öffnung 25 und den Hohlraum 7 des Bremssattels hindurch bis an das Werkzeug 55, und ergreift dieses. Zugleich oder anschließend gibt das Spannfutter des Werkzeughalters 52 das Werkzeug frei. Daraufhin fährt der Werkzeuggreifer 53 mit dem Werkzeug 55 wieder in die Warteposition zurückfährt.

Das Bearbeiten und vorzugsweise Fräsen der Abstützflächen 20 ist damit beendet, und es kann entweder in derselben Einspannung des Bremssattels 1 oder in einer anderen Einspannung oder in einer anderen Werkzeugmaschine eine weitere innere oder auch äußere Bearbeitung des Bremssattels 1 beginnen.

Die Schritte des Verfahrens können selbstverständlich auch erreicht werden, wenn die Werkstückaufnahme in der Werkzeugmaschine unbeweglich fixiert ist und sich der Werkzeughalter bewegt. Auch die Kombination einer Bewegung von Werkzeug- und Werkstückhalter ist denkbar.

### Bezugszeichenliste

- 1: Bremssattel
- 2: Bremsscheibe
- 4: Öffnung, Montageöffnung
- 5: Deckel
- 6: Freiraum
- 7: Hohlraum
- 8: Druckstück, Traverse
- 10: Bremshebel
- 11: Sattelabschnitt
- 12: Sattelabschnitt
- 13: Brückenabschnitt
- 14: Hebelarm
- 15: Zuspannwelle
- 16: Schwenklager
- 17: Schwenklager
- 18: Sattelrückwand
- 20: Abstützfläche
- 21: Lagerschale
- 25: Öffnung
- 26: Plateau
- 29: Außenseite
- 30: Stützflächenabschnitt
- 31: Mittelabschnitt
- 32: Einschnitt
- 33: Einschnitt
- 34: Lasche
- 35: Lasche
- 50: Werkzeugmaschine
- 52: Werkzeughalter
- 53: Werkzeuggreifer
- 54: Maschinengestell
- 55: Werkzeug
- A: Drehachse der Bremsscheibe
- E: Ebene der Bremsscheibe
- x: Achse
- y: Achse
- z: Achse
- Z: Zuspannrichtung, Nachstellachse

## Patentansprüche

1. Verfahren zur Innenbearbeitung eines Bremssattels (1) einer Scheibenbremse, an dem ausgebildet sind
- ein erster Sattelabschnitt (11) zu der einen Seite der Bremsscheibe der Scheibenbremse,
- ein zweiter Sattelabschnitt (12) zu der anderen Seite der Bremsscheibe, und
- ein die Sattelabschnitte (11, 12) verbindender, einen Freiraum (6) für zumindest einen Teil der Bremsscheibe bereitstellender Brückenabschnitt (13),
wobei zumindest einer der Sattelabschnitte mit einem für die Aufnahme einer Bremszuspanneinrichtung bestimmten Hohlraum (7) versehen ist, welcher zu dem Freiraum (6) hin eine Montageöffnung (4) aufweist und sich in entgegengesetzter Richtung bis zu einer Sattelrückwand (18) erstreckt, an der innen zwei Abstützflächen (20) für die beim Zuspannen wirkenden Kräfte ausgebildet ist,
wobei die Bearbeitung der Abstützflächen (20) von dem Freiraum (6) her und durch die Montageöffnung (4) hindurch erfolgt, und hierzu ein Werkzeug (55) von außerhalb des Bremssattels (1) in den Hohlraum (7) verbracht wird,
**dadurch gekennzeichnet,**
**dass** das Werkzeug (55) durch eine andere Öffnung (25) als die Montageöffnung (4) hindurch in den Hohlraum (7) geführt wird.
wieder aus dem Hohlraum (7) hinaus geführt wird.

2. Verfahren nach Anspruch 1, **dadurch gekennzeichnet, dass** das Werkzeug (55) nach Abschluss der Bearbeitung durch die Öffnung (25) hindurch

3. Verfahren nach Anspruch 1 oder 2, **dadurch gekennzeichnet, dass** sich die Öffnung (25), durch die das Werkzeug (55) geführt wird, in der Sattelrückwand (18) befindet.

4. Verfahren nach einem der Ansprüche 1 - 3, **dadurch gekennzeichnet, dass** das durch die Öffnung (25) geführte Werkzeug (55) anschließend an einen Werkzeughalter (52) übergeben wird.

5. Verfahren nach Anspruch 4, **dadurch gekennzeichnet, dass** der Werkzeughalter (52) mit einem Drehantrieb für das Werkzeug (55) versehen ist.

6. Verfahren nach Anspruch 4 oder 5, **dadurch gekennzeichnet, dass** das Werkzeug (55) durch eine Bewegung in Längsrichtung der Öffnung (25) an den Werkzeughalter (52) übergeben wird.

7. Verfahren nach einem der Ansprüche4 - 6, **dadurch gekennzeichnet, dass** der Werkzeughalter (52) während der Übergabe des Werkzeugs (55) zumindest teilweise in den Freiraum (6) zwischen den Sattelabschnitten (11, 12) hinein ragt.

8. Verfahren nach einem der Ansprüche4 - 7, **gekennzeichnet durch** die Schritte des Überführens des Werkzeugs (55) zu dem Werkzeughalter (52) und des Wegführens des Werkzeugs (55) nach dessen Entkopplung von dem Werkzeughalter (52).

9. Verfahren nach einem der Ansprüche4 - 8, **dadurch gekennzeichnet, dass** der Bremssattel (1) in einer Werkstückaufnahme fest positioniert ist, die relativ zu einem ortsfest angeordneten Maschinengestell in mindestens zwei Bewegungsachsen (x, y) verfahrbar ist und bei der Bearbeitung der Abstützfläche (20) entlang einer dieser Bearbeitungsachsen bewegt wird.

10. Verfahren nach Anspruch 9, **dadurch gekennzeichnet, dass** der Werkzeughalter (52) ortsfest an dem Maschinengestell angeordnet ist.

11. Verfahren nach einem der Ansprüche 3 - 10, **dadurch gekennzeichnet, dass** nacheinander zunächst eine erste Abstützfläche, die sich zu der einen Seite der Öffnung (25) befindet, und dann eine zu dieser fluchtende, zweite Abstützfläche, die sich zu der anderen Seite der Öffnung (25) befindet, bearbeitet werden.

12. Verfahren nach Anspruch 11, **dadurch gekennzeichnet, dass** nach dem Ankoppeln eine Relativbewegung des Werkzeugs (55) zu dem Bremssattel (1) in der folgenden Reihenfolge durchgeführt wird:
a) ausgehend von einem Startpunktgegenüberliegend der Öffnung (25) zu einer Seite dieser Öffnung (25) hin und innen längs der Sattelrückwand (18),
b) zurück in den Bereich gegenüberliegend der Öffnung (25), und von dort zu der anderen Seite dieser Öffnung (25) hin und wiederum innen längs der Sattelrückwand (18),
c) zurück in den Bereich gegenüberliegend der Öffnung (25).

13. Verfahren nach einem der vorangehenden Ansprüche, **dadurch gekennzeichnet, dass** die Abstützfläche (20) H-förmig bearbeitet wird unter Ausbildung zweier breiterer Stützflächenabschnitte (30) und eines zwischen diesen angeordneten, schmaleren Mittelabschnitts (31).

14. Verfahren nach einem der vorangehenden Ansprüche, **dadurch gekennzeichnet, dass** die Abstützfläche (20) alsteilzylindrische Rinne bearbeitet wird.

15. Verfahren nach Anspruch 14, **dadurch gekennzeichnet, dass** auf die bearbeitete Abstützfläche (20) eine als teilzylindrische Rinne gestaltete Lagerschale (21) aufgesetzt wird.

16. Verfahren nach einem der Ansprüche 4 - 15, **dadurch gekennzeichnet, dass** das Werkzeug (55) mittels eines Werkzeuggreifers (53) in einer geradlinigen Bewegung an den Werkzeughalter (52) übergeben wird.

## Claims

1. Method for machining the interior of a brake caliper (1) of a disc brake, on which are formed:
- a first caliper portion (11) on the one side of the brake disc of the disc brake,
- a second caliper portion (12) on the other side of the brake disc, and
- a bridge portion (13) connecting the caliper portions (11, 12) and providing a free space (6) for at least a part of the brake disc,
wherein at least one of the caliper portions is provided with a cavity (7) for receiving a brake application device, which cavity (7) comprises a mounting opening (4) towards the free space (6) and extends in the opposite direction as far as a caliper rear wall (18), on the inner side of which two support surfaces (20) are formed for the forces acting during the brake application,
wherein the machining of the support surfaces (20) is carried out from the free space (6) and through the mounting opening (4), and for this purpose, a tool (55) is brought into the cavity (7) from outside the brake caliper (1),
**characterized in that**
the tool (55) is guided into the cavity (7) through an opening (25) other than the mounting opening (4).

2. Method according to Claim 1, **characterized in that** after completing the machining, the tool (55) is withdrawn again from the cavity (7) through the opening (25).

3. Method according to Claim 1 or 2, **characterized in that** the opening (25) through which the tool (55) is guided is located in the caliper rear wall (18) .

4. Method according to any of Claims 1 - 3, **characterized in that** the tool (55) which is guided through the opening (25) is then transferred to a tool holder (52).

5. Method according to Claim 4, **characterized in that** the tool holder (52) is provided with a rotary drive for the tool (55).

6. Method according to Claim 4 or 5, **characterized in that** the tool (55) is transferred to the tool holder (52) by a movement in the longitudinal direction of the opening (25).

7. Method according to any of Claims 4-6, **characterized in that** during transfer of the tool (55), the tool holder (52) protrudes at least partially into the free space (6) between the caliper portions (11, 12).

8. Method according to any of Claims 4-7, **characterized by** the steps of transferring the tool (55) to the tool holder (52) and withdrawing the tool (55) after it has been decoupled from the tool holder (52).

9. Method according to any of Claims 4 - 8, **characterized in that** the brake caliper (1) is fixedly positioned in a workpiece holder which can be moved in at least two movement axes (x, y) relative to a stationary machine frame and is moved along one of these machining axes during machining of the support surface (20).

10. Method according to Claim 9, **characterized in that** the tool holder (52) is arranged so as to be stationary on the machine frame.

11. Method according to any of Claims 3 - 10, **characterized in that** successively initially a first support surface situated on the one side of the opening (25) and then a second support surface aligned thereto and situated on the other side of the opening (25) are machined.

12. Method according to Claim 11, **characterized in that** after coupling, a relative movement of the tool (55) relative to the brake caliper (1) takes place in the following order:
a) starting from a starting point opposite the opening (25), towards one side of this opening (25) and along the inside of the caliper rear wall (18),
b) back into the region opposite the opening (25), and from there towards the other side of this opening (25) and again along the inside of the caliper rear wall (18),
c) back into the region opposite the opening (25).

13. Method according to any of the preceding claims, **characterized in that** the support surface (20) is machined into an H shape forming two wider support surface portions (30) and arranged in between these a narrower middle portion (31).

14. Method according to any of the preceding claims, **characterized in that** the support surface (20) is machined as a partially cylindrical channel.

15. Method according to Claim 14, **characterized in that** a bearing shell (21) formed as a partially cylindrical channel is placed on the machined support surface (20).

16. Method according to any of Claims 4 - 15, **characterized in that** the tool (55) is transferred to the tool holder (52) by means of a tool gripper (53) in a rectilinear movement.

## Revendications

1. Procédé d'usinage intérieur d'un étrier de frein (1) d'un frein à disque, sur lequel sont formées
- une première partie d'étrier (11) d'un côté du disque de frein du frein à disque,
- une deuxième partie d'étrier (12) de l'autre côté du disque de frein et
- une partie formant pont (13) reliant les parties d'étrier (11, 12) et produisant un espace libre (6) pour au moins une partie du disque de frein,
dans lequel au moins l'une des parties d'étrier est dotée d'une cavité (7) destinée à la réception d'un dispositif de serrage de frein, laquelle cavité comprend une ouverture de montage (4) en direction de l'espace libre (6) et s'étend en sens inverse jusqu'à une paroi arrière d'étrier (18) sur l'intérieur de laquelle sont formée deux surfaces de support (20) pour les forces agissant lors du serrage,
dans lequel l'usinage de les surfaces de support (20) s'effectue à partir de l'espace libre (6) et à travers l'ouverture de montage (4) et, à cet effet, un outil (55) est amené dans la cavité (7) depuis l'extérieur de l'étrier de frein (1),
**caractérisé en ce que**
l'outil (55) est guidé dans la cavité (7) à travers une autre ouverture (25) que l'ouverture de montage (4).

2. Procédé selon la revendication 1, **caractérisé en ce que** l'outil (55) est guidé à nouveau hors de la cavité (7) à travers l'ouverture (25) une fois l'usinage terminé.

3. Procédé selon la revendication 1 ou 2, **caractérisé en ce que** l'ouverture (25) à travers laquelle l'outil (55) est guidé se trouve dans la paroi arrière d'étrier (18) .

4. Procédé selon l'une des revendications 1 à 3, **caractérisé en ce que** l'outil (55) guidé à travers l'ouverture (25) est ensuite transféré à un porte-outil (52) .

5. Procédé selon la revendication 4, **caractérisé en ce que** le porte-outil (52) est doté d'un entraînement rotatif pour l'outil (55).

6. Procédé selon la revendication 4 ou 5, **caractérisé en ce que** l'outil (55) est transféré au porte-outil (52) par un déplacement dans la direction longitudinale de l'ouverture (25).

7. Procédé selon l'une des revendications 4 à 6, **caractérisé en ce que** , pendant le transfert de l'outil (55), le porte-outil (52) fait saillie au moins partiellement dans l'espace libre (6) entre les parties d'étrier (11, 12).

8. Procédé selon l'une des revendications 4 à 7, **caractérisé par** les étapes de transfert de l'outil (55) au porte-outil (52) et d'éloignement de l'outil (55) après son désaccouplement du porte-outil (52).

9. Procédé selon l'une des revendications 4 à 8, **caractérisé en ce que** l'étrier de frein (1) est positionné fixement dans un logement de pièce qui est déplaçable suivant au moins deux axes de déplacement (x, y) par rapport à un bâti de machine disposé de manière fixe et est déplacé le long de l'un de ces axes d'usinage lors de l'usinage de la surface de support (20).

10. Procédé selon la revendication 9, **caractérisé en ce que** le porte-outil (52) est disposé de manière fixe sur le bâti de machine.

11. Procédé selon l'une des revendications 3 à 10, **caractérisé en ce que** , tour à tour, tout d'abord une première surface de support qui se trouve d'un côté de l'ouverture (25) et ensuite une deuxième surface de support alignée par rapport à celle-ci et se trouvant de l'autre côté de l'ouverture (25) sont usinées.

12. Procédé selon la revendication 11, **caractérisé en ce qu'** après l'accouplement, un déplacement relatif de l'outil (55) par rapport à l'étrier de frein (1) est effectué suivant la séquence suivante :
a) à partir d'un point de départ en regard de l'ouverture (25) vers un côté de cette ouverture (25) et à l'intérieur le long de la paroi arrière d'étrier (18),
b) retour à la région en regard de l'ouverture (25), et, de la, vers l'autre côté de cette ouverture (25) et à nouveau à l'intérieur le long de la paroi arrière d'étrier (18),
c) retour à la région en regard de l'ouverture (25).

13. Procédé selon l'une des revendications précédentes, **caractérisé en ce que** la surface de support (20) est usinée en forme de H en formant deux parties de surface de support (30) plus larges et une partie centrale (31) plus étroite disposée entre celles-ci.

14. Procédé selon l'une des revendications précédentes, **caractérisé en ce que** la surface de support (20) est usinée en tant que canal partiellement cylindrique.

15. Procédé selon la revendication 14, **caractérisé en ce qu'**un coussinet de palier (21) formé en tant que canal partiellement cylindrique est placé sur la surface de support (20) usinée.

16. Procédé selon l'une des revendications 4 à 15, **caractérisé en ce que** l'outil (55) est transféré au porte-outil (52) suivant un déplacement rectiligne au moyen d'un dispositif de préhension d'outil (53).
